# EUROPÄISCHE PATENTSCHRIFT

(11) **EP 2 067 827 B1**
(45) Veröffentlichungstag und Bekanntmachung des Hinweises auf die Patenterteilung: **18.11.2009**
(21) Anmeldenummer: 08018070.6
(22) Anmeldetag: 15.10.2008
(51) Int. Cl.: C09D 9/00, C11D 7/50

(54) **Lackentferner für den Modellbau**
Paint remover for building models
Dispositif de suppression de laque pour la construction modélisée

(30) Priorität: 03.12.2007 DE 102007058080
(43) Veröffentlichungstag der Anmeldung: 10.06.2009
(73) Patentinhaber: Frick, Andreas, 67105 Schifferstadt (DE)
(72) Erfinder: Frick, Andreas, 67105 Schifferstadt (DE)
(74) Vertreter: Müller-Boré & Partner Patentanwälte

(56) Entgegenhaltungen:
- EP-A1- 0 410 277
- DE-A1- 19 700 168
- US-A- 5 911 838

## Beschreibung

Die vorliegende Anmeldung betrifft die Verwendung einer Zusammensetzung zur Entfernung von im Modellbau verwendeten Farben und/oder Lacken, wobei das Trägermaterial, auf welchem sich die Farbe und/oder der Lack befindet, nicht beeinträchtigt wird.

Ein Großteil der im Modellbau verwendeten Materialien ist der Familie der Kunststoffe zuzuordnen, darunter beispielsweise Polyethylen, Polypropylen, Polycarbonat, Polyvinylchlorid, Polyurethan, und viele weitere, einschließlich deren Derivate. Diese Kunststoffe verbinden die Vorteile einer kostengünstigen Herstellung, einer besonders vorteilhaften Formbarkeit und eines geringen Gewichts bei gleichzeitig hoher Steifigkeit. Zudem lassen sich die einzelne Komponenten eines Modells auf ideale Art und Weise mit einfachen Mitteln wie beispielsweise Kunststoffklebern verbinden.

Aufgrund der häufigen Verwendung von Kunststoffen im heutigen Modellbau wird ein hoher Grad an Detailreichtum erzielt, der sich beispielsweise in winzig kleinen Strukturen auf den Bauteilen, aber auch durch die Verwendung von transparenten Kunststoffteilen widerspiegelt.

Ein weiterer Vorteil von Kunststoffen im Modellbau ist die Verfügbarkeit einer Großzahl von geeigneten Farben und Lacken für die Bemalung des jeweiligen Modells oder einzelner Teile desselben. Diese Farben haften dauerhaft am jeweiligen Kunststoff und bilden im idealen Fall eine gleichmäßige Farbschicht aus.

Zur Entfernung solcher Farben und Lacke im Modellbau, beispielsweise zur Korrektur oder Umgestaltung eines Modell, werden verschiedene Ansätze verfolgt.

Unter anderem ist es möglich die aufgetragene Farb- oder Lackschicht durch abrasives Abtragen, beispielsweise durch Abschmirgeln mit einem feinen Sandpapier oder unter Verwendung anderer im Stand der Technik bekannter Schleifmittel zu entfernen. Dieses Vorgehen weist jedoch die schwerwiegenden Nachteile auf, dass durch ein Abschleifen auch kleinste Strukturen im Modell oder einem Bauteil davon abgetragen werden. Auf diese Weise verändert sich die ursprüngliche Form des Modells, Konturen verwischen, oder charakteristische Details daran gehen verloren.

Alternativ hat sich herausgestellt, dass ein Einlegen des jeweiligen Modells oder Teile desselben in Bremsflüssigkeit ebenfalls bedingt geeignet ist, um eine darauf befindliche Farb- oder Lackschicht im Wesentlichen zu entfernen. Allerdings ist hierbei ebenfalls nicht auszuschließen, dass das Modell oder das Bauteil davon von der Bremsflüssigkeit angegriffen wird, was zu dem bereits vorstehend erwähnten Verlust von strukturellen Details oder einer Änderung der ursprünglichen Form führt. Auch kann durch eine solche Behandlung die Oberfläche derart verändert werden, dass ein erneutes Auftragen von Farbe keine zufriedenstellenden Ergebnisse mehr liefert.

Die Verwendung von Lösungs- oder Verdünnungsmitteln wie beispielsweise Aceton oder Methylethylketon (MEK) wird ebenso von den vorstehend erwähnten Nachteilen begleitet. Insbesondere solche Lösungsmittel wie Aceton und MEK lösen die Oberfläche des Modells an und führen bei längerem Gebrauch zu einer Zerstörung des Modells.

Alle vorstehend aufgeführten Verfahren zum Entfernen von Farben oder Lacken im Modellbau bergen daher die Gefahr, das Modell zu beschädigen oder seine Qualität herabzusetzen. Besonders problematisch ist dies bei transparenten Kunststoffteilen, welche beispielsweise zur Modellverglasung verwendet werden. Hier wird häufig ein "Blindwerden", d.h. ein Verlust oder eine Verminderung der Transparenz der jeweils behandelten Stelle, insbesondere durch Verwendung von Lösungsmitteln wie Aceton oder MEK, beobachtet.

Die Aufgabe der vorliegenden Erfindung betrifft daher das Bereitstellen einer Zusammensetzung, welche das schonende Entfernen einer Farb- oder Lackschicht im Modellbau ermöglicht, und somit die vorstehend ausgeführten Probleme minimiert oder vermeidet.

Diese Aufgabe wird durch die in den Ansprüchen definierten Ausführungsformen erfüllt.

Insbesondere wird die Verwendung einer Zusammensetzung zur Entfernung von Farben und/oder Lacken im Modellbau bereitgestellt, umfassend 85 bis 95 Vol.-% 1-Methoxy-2-propanol und 5 bis 15 Vol.-% Ethylacetat.

Die Bezeichnung "Modellbau" betrifft hierin die allgemeine Herstellung eines konkreten dreidimensionalen physischen Objekts, beispielsweise als verkleinerte oder vereinfachte Nachbildung eines realen oder geplanten Vorbildes.

Die erfindungsgemäß verwendete Zusammensetzung ist besonders geeignet, Farben und/oder Lacke von Kunststoffteilen eines Modells zu entfernen, jedoch beinhaltet die vorliegende Erfindung auch das Entfernen von Farben und/oder Lacken, welche auf andere Werkstoffe, wie beispielsweise Glas, spezielle Holzsorten oder Metalle aufgetragen wurden.

Die Zusammensetzung gemäß der vorliegenden Erfindung umfasst 85 bis 95 Vol.-% 1-Methoxy-2-propanol und 5 bis 15 Vol.-% Ethylacetat, bevorzugt 87,5 bis 92,5 Vol-% 1-Methoxy-2-propanol und 7,5 bis 12,5 Vol-% Ethylacetat, und besonders bevorzugt 90 Vol-% 1-Methoxy-2-propanol und 10 Vol-% Ethylacetat.

Gegebenenfalls kann die erfindungsgemäß verwendete Zusammensetzung auch weitere Substanzen enthalten, die das Lösungsverhalten und/oder die Wirkung auf das Trägermaterial der vorstehend erwähnten Farben bzw. Lacke beeinflussen. Ebenso kann die Zusammensetzung der vorliegenden Erfindung weitere Substanzen enthalten, welche die Verwendung vereinfachen oder angenehmer gestalten. Hierzu zählen beispielsweise Substanzen, welche die Viskosität oder den Geruch der Zusammensetzung beeinflussen.

Die erfindungsgemäße Verwendung schließt das Entfernen aller geeigneter Farben und/oder Lacke ein. Die betreffende Farb- bzw. Lackschicht kann sich über eine große Fläche erstrecken oder nur einen kleinen Bereich betreffen. Durch die erfindungsgemäße Verwendung ist es weiter möglich, mehrere übereinander liegende Farb- und/oder Lackschichten zu entfernen, ohne dabei die Qualität des Modells bzw. des Bauteils wesentlich zu beeinträchtigen.

In der Verwendung der vorliegenden Erfindung wird beispielsweise ein weiches Tuch oder eine vergleichbare Textilie schwach mit der erfindungsgemäßen Zusammensetzung benetzt und die zu entfernende Farb- bzw. Lackschicht wird unter geringer Druckaufbringung abgerieben oder abgetupft. Zur Bearbeitung detailreicher oder sterisch schwer zugänglicher Stellen kann statt eines weichen Tuches auch ein feineres Applikationsmittel wie beispielsweise ein Wattestäbchen herangezogen werden.

Gemäß einer weiteren Ausführungsform der vorliegenden Erfindung umfasst die vorstehend definierte Zusammensetzung 90 Vol.-% 1-Methoxy-2-propanol und 10 Vol.-% Ethylacetat.

Im Rahmen der vorliegenden Erfindung kann ein Kit vorgesehen werden, umfassend die vorstehend definierte Zusammensetzung und gegebenenfalls ein Applikationsmittel zum Auftragen der Zusammensetzung.

Der Kit enthält einen geeigneten Behälter, welcher die erfindungsgemäß verwendete Zusammensetzung enthält und eine dauerhafte Lagerung ermöglicht. Ein solcher Behälter kann beispielsweise aus Glas oder Kunststoff gefertigt sein. Desweiteren umfasst der Kit gegebenenfalls als ein Applikationsmittel zum Auftragen der Zusammensetzung, ein weiches Tuch bzw. eine vergleichbare Textilie, einen Pinsel, Wattestäbchen oder ein anderes geeignetes saugfähiges Material, wodurch die Zusammensetzung dosiert und präzise aufgetragen werden kann.

Die erfindungsgemäß eingesetzte Zusammensetzung bzw. die Verwendung derselben zum Entfernen von Farben und/oder Lacken im Modellbau erlauben im Vergleich zu den im Stand der Technik bekannten Zusammensetzungen bzw. Verwendungen das leichte Entfernen auch alter und fest sitzender Modelllackierungen, ohne dabei die Konturen des Modells oder eines Teils davon zu beeinträchtigen. Dies gilt auf vorteilhafte Weise ebenso für zumindest teilweise transparente Materialien wie beispielsweise Lexan oder eine Kunststoff-Modellverglasung, welche auch nach der Farb- bzw. Lackentfernung eine hohe Transparenz aufweisen. Desweiteren ist die erfindungsgemäß verwendete Zusammensetzung überraschend sparsam in der Anwendung, da bereits kleinste Mengen ausreichen, um beträchtliche Mengen Farbe bzw. Lack zu entfernen. Durch die hervorragenden Lösungseigenschaften bei gleichzeitig schonender Wirkung auf das Modellmaterial gelingt es so, feinste Konturen unter der Farb- bzw. Lackschicht wieder freizulegen und so den ursprünglichen Zustand des Materials wieder herzustellen.

## Patentansprüche

1. Verwendung einer Zusammensetzung, umfassend 85 bis 95 Vol.-% 1-Methoxy-2-propanol und 5 bis 15 Vol.-% Ethylacetat, zur Entfernung von Farben und/oder Lacken im Modellbau.

2. Verwendung nach Anspruch 1, wobei die Zusammensetzung 90 Vol.-% 1-Methoxy-2-propanol und 10 Vol.-% Ethylacetat umfasst.

## Claims

1. Use of a composition comprising 85 % to 95 % by volume of 1-methoxy-2-propanole and 5 % to 15 % by volume of ethyl acetate for removal of paints and/or lacquers in kit modelling.

2. Use according to claim 1, wherein the composition comprises 90 % by volume of 1-methoxy-2-propanole and 10 % by volume of ethyl acetate.

## Revendications

1. Utilisation d'une composition comprenant de 85 à 95 %-vol. d' 1-méthoxy-2-propanole et de 5 à 15 %-vol. d'éthyl-acétate pour éliminer les peintures ou/et les vernis des maquettes.

2. Utilisation selon la revendication 1 de la composition comprenant 90 %-vol. d' 1-méthoxy-2-propanole et 10%-vol. d'éthyl-acétate.
